# EUROPÄISCHE PATENTSCHRIFT

(11) **EP 2 618 033 B1**
(45) Veröffentlichungstag und Bekanntmachung des Hinweises auf die Patenterteilung: **19.11.2014**
(21) Anmeldenummer: 12198848.9
(22) Anmeldetag: 21.12.2012
(51) Int. Cl.: F16K 7/12

(54) **Membranventil**
Membrane valve
Soupape à diaphragme

(30) Priorität: 18.01.2012 DE 102012200696
(43) Veröffentlichungstag der Anmeldung: 24.07.2013
(73) Patentinhaber: GEMÜ Gebrüder Müller Apparatebau GmbH & Co. KG, 74653 Ingelfingen (DE)
(72) Erfinder: Müller, Fritz, 74653 Ingelfingen (DE); Müller Heribert, 74653 Künzelsau-Morsbach (DE)
(74) Vertreter: DREISS Patentanwälte PartG mbB

(56) Entgegenhaltungen:
- GB-A- 996 847
- US-A- 2 725 211
- US-A- 2 918 089
- US-A- 3 134 571
- US-A1- 2011 031 427

## Beschreibung

Die Erfindung betrifft ein Membranventil, insbesondere für fluide Medien, mit den Merkmalen des Oberbegriffs des Anspruchs 1.

Membranventile sind hinreichend bekannt und dienen dazu, die Menge eines Fluides in einem Fluidstrom zu steuern. Bei einem bekannten Membranventil dieser Art (DE 20 2005 002 152 U1) ist das Druckstück in einem Zwischenstück geführt und drückt eine Absperrmembran auf einen Dichtsteg des Ventilkörpers. Dabei liegt die Absperrmembran mit ihrem Membranschild am Ventilkörper an und dichtet nach außen hin über eine Dichtkante ab, die auf einem umlaufenden Rand des Ventilkörpers aufliegt. Das Druckstück liegt an einer Stützmembran an, welche an der Oberseite des Membranschildes sich befindet.

Als nachteilig wird angesehen, dass eine Zentrierung von Membranschild und Stützmembran ausschließlich über die Verschraubung von Zwischenstück und Ventilkörper erfolgt. Da die Aussparungen für die Schrauben im Membranschild und der Stützmembran aber großzügig bemessen sind, führt das dadurch erzeugte Spiel dazu, dass einerseits den Membranschild und die Stützmembran, andererseits die Absperrmembran bezüglich des Ventilkörpers und des Druckstücks nicht unbedingt genau positioniert sind. Außerdem wird als nachteilig angesehen, dass bei einem herkömmlichen Membranschild die Dichtstege einerseits schmal ausgeführt, andererseits durch Materialanhäufung hergestellt sind.

Aus der US 2011/0031427 A1 ist ein Membranventil bekannt, bei welchem zwischen Druckstück und Stützmembran Druckscheiben vorgesehen sind, über welche der Rand der Stützmembran und es Membranschildes an den Ventilkörper angepresst werden. Die GB 996 847 A offenbart einen Membranschild, welcher sandwichartig aufgebaut ist und bis zu seiner Randfläche von einer Stützmembran überdeckt wird. Im Randbereich weisen der Membranschild und die Stützmembran einen nach unten in Richtung des Ventilkörpers abragenden Wulst auf. Die US 2,918,089 A zeigt ein Membranventil, bei welchem der Membranschild bis zu seiner Randfläche ebenfalls von der Stützmembran überdeckt wird.

Der Erfindung liegt daher die Aufgabe zugrunde, ein Membranventil bereit zu stellen, welches eine höhere Qualität hinsichtlich der Dichtigkeit und der Abdichtung besitzt.

Diese Aufgabe wird erfindungsgemäß mit einem Membranventil gelöst, das die Merkmale des Anspruchs 1 aufweist.

Durch die einheitliche Dicke des Membranschildes wird der Vorteil erzielt, dass im Fertigungsprozess Fehlerquellen bei der Herstellung (Quenchen) des Membranschildes vermieden werden. Zudem ist die Dicke nicht nur gleichmäßig sondern auch relativ gering, und weist z.B. bei einer Absperrmembran DN 10 1 mm, DN 25 bis 50 1,5 mm, DN 65 bis 100 (MG 80) 2 mm auf, wobei die Dicke der Kammerung, in dem die Stützmembran radial überragenden Bereich, 1 mm dicker ist. Beim Quenchen muss das Material im für die Dichtung wesentlichen Bereich nur umgeformt und nicht angehäuft werden.

Erfindungsgemäß weist der Membranschild im am Rand des Ventilkörpers aufliegenden Bereich einen Dichtungswulst auf, der eine breite, insbesondere flächige Auflagefläche besitzt. Die Breite des Dichtungswulstes entspricht mindestens der Dicke des Membranschildes. Für die Dichtheit nach außen weist der Ventilkörper einen Dichtungswulst auf, auf dem der kreisförmige erhabene Dichtungswulst des Membranschildes zu liegen kommt. Durch diese Erhebung wird erreicht, dass die Flächenpressung auf den Schild zur Abdichtung nach außen definiert im Bereich der Dichtkontur des Ventilkörpers aufgebracht wird.

Erfindungsgemäß überragt der Membranschild die Stützmembran radial. Dabei besitzt der die Stützmembran überragende Rand des Membranschildes die gleiche oder eine größere Dicke, als der von der Stützmembran überdeckte Teil des Membranschildes.

Mit Vorzug ist der Rand des Membranschildes bei montiertem Membranventil von außen sichtbar. Der Membranschild ist also breiter ausgeführt als die Stützmembran, um von außen erkennen zu können, ob der Membranschild durch ein Vakuum in der Rohrleitung nach innen gezogen wurde. Durch diese sogenannte Kammerung kann z.B. bei bestimmten Größen vom Membranen die zur Montage notwendige Verpressung von außen durch einen Formschluss der unteren Kante des Zwischenstücks und der oberen Kante der Kammerung erkennbar sein. Die Kammerung verhindert oder zumindest erschwert ein Fließen des Schildes nach innen in Richtung der Rohrleitung, was zu einer Undichtheit nach außen führen kann.

Ein ansprechendes Erscheinungsbild des Membranventils wird dadurch geschaffen, dass der Rand des Membranschildes bündig mit dem am Membranschild oder der Stützmembran anliegenden Flansch des Zwischenstücks abschließt. Außerdem lässt sich das Membranventil auf diese Weise besser reinigen.

Eine optimale Verteilung der Anpresskraft und zudem eine Gewähr gegen Verdrehen und Verschieben des Membranschildes gegenüber der Stützmembran wird dadurch erreicht, dass der Membranschild auf der dem Dichtungswulst gegenüberliegenden Seite eine Nut aufweist und dass die Stützmembran auf ihrer dem Membranschild zugewandten Seite einen in die Nut eingreifenden Stützwulst aufweist. Die Stützwulst ist geringfügig größer ausgebildet, um im Bereich des Dichtungswulstes des Membranschildes eine größere Pressung zu erzielen.

Wie bei herkömmlichen Membranventilen weist der Membranschild eine auf dem Dichtsteg des Ventilkörpers zu liegen kommende Dichtkante auf. Dabei ist aber vorgesehen, dass der Membranschild auf der der Dichtkante gegenüberliegenden Seite eine Nut aufweist und die Stützmembran weist auf ihrer dem Membranschild zugewandten Seite einen in die Nut eingreifenden Stützwulst auf. Trotz gleichbleibender Wandstärke des Membranschildes kann dennoch ein Formschluss von Stützmembran und Membranschild geschaffen werden. Außerdem ist eine vollflächige Anlage der Stützmembran am Membranschild gewährleistet.

Die eingangs genannte Aufgabe wird außerdem durch einen Membranschild und/oder eine Stützmembran für ein Membranventil gelöst, das bzw. die die vorhergehenden Merkmale aufweisen.

Weitere Vorteile, Merkmale und Einzelheiten der Erfindung ergeben sich aus den Unteransprüchen sowie der nachfolgenden Beschreibung, in der unter Bezugnahme auf die Zeichnung ein besonders bevorzugtes Ausführungsbeispiel im Einzelnen beschrieben ist. Dabei können die in der Zeichnung dargestellten sowie in der Beschreibung und/oder in den Ansprüchen erwähnten Merkmale jeweils einzeln für sich oder in beliebiger Kombination erfindungswesentlich sein.

In der Zeichnung zeigen:
- Figur 1: eine Explosionsdarstellung des erfindungsgemäßen Membranventils;
- Figur 2: eine Seitenansicht des Membranventils vor der Verpressung;
- Figur 3: einen Längsschnitt durch den linken Teil des Membranventils nach der Verpressung;
- Figur 4: eine Seitenansicht des rechten Teils des Membranventils nach der Verpressung;
- Figur 5: eine Draufsicht auf den Membranschild;
- Figur 6: einen Schnitt VI - VI gemäß Figur 5;
- Figur 7: eine vergrößerte Wiedergabe des Ausschnitts VII gemäß Figur 6;
- Figur 8: eine vergrößerte Wiedergabe des Ausschnitts VIII gemäß Figur 6;
- Figur 9: eine vergrößerte Wiedergabe des Ausschnitts IX gemäß Figur 6;
- Figur 10: eine Draufsicht auf die Stützmembran;
- Figur 11: einen Schnitt XI - XI gemäß Figur 10;
- Figur 12: eine vergrößerte Wiedergabe des Ausschnitts XII gemäß Figur 11; und
- Figur 13: eine vergrößerte Wiedergabe des Ausschnitts XIII gemäß Figur 11;

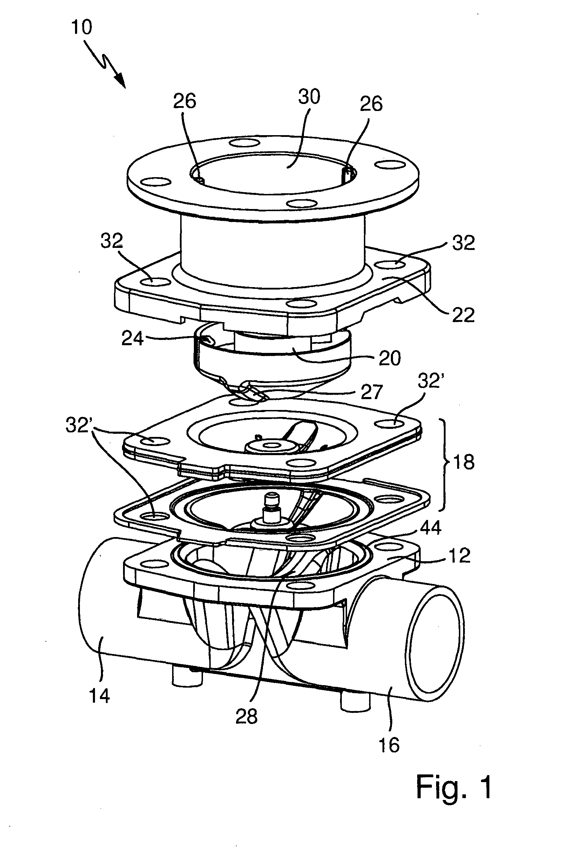

Die Figur 1 zeigt ein insgesamt mit 10 bezeichnetes Membranventil, dabei sind aber der Antrieb und die Ventilspindel nicht dargestellt. Das Membranventil 10 umfasst einen Ventilkörper 12 mit rohrstutzenförmigen Anschlüssen 14 und 16. Zwischen dem Ventilkörper 12 und einem Zwischenstück 30 ist eine Absperrmembran 18 angeordnet, wobei das Zwischenstück 30 und der Ventilkörper 12 durch nicht dargestellte Schrauben fest miteinander verbunden sind.

Im Innern des im wesentlichen hohlzylindrischen Zwischenstückes 30 befindet sich ein Druckstück 20, das durch die nicht dargestellte Ventilspindel, mit der das Druckstück geeignet verbunden ist, betätigbar ist. Das Druckstück 20 ist an seinem Außenumfang mit zwei sich diametral gegenüberliegenden axial verlaufenden Nuten 24 versehen, und das Zwischenstück 30 hat an seiner Innenwand zwei sich diametral gegenüber liegende, axial verlaufende Führungsstege 26, die in die Nuten 24 des Druckstückes 20 eingreifen. Das Druckstück 20 ist somit durch den Eingriff der Führungsstege 26 in die Nuten 24 im Zwischenstück 30 in axialer Richtung geführt und gegen Verdrehen gesichert. Weiterhin weist das Druckstück 20 einen Dichtsteg 27 auf, der einem Dichtsteg 28 des Ventilkörpers 12 gegenüberliegt.

Der Flansch 22 des Zwischenstücks 30 weist Aussparungen 32 für die Schrauben auf, mittels denen das Zwischenstück 30 und der Ventilkörper 12 miteinander verschraubt werden. Da die Aussparungen 32 großzügig bemessen sind, können die Schrauben die Absperrmembran 18 in deren Aussparungen 32' nicht führen, weshalb die Absperrmembran 18 bezüglich des Ventilkörpers 12 und des Druckstücks 20 nicht unbedingt genau positioniert sein muss.

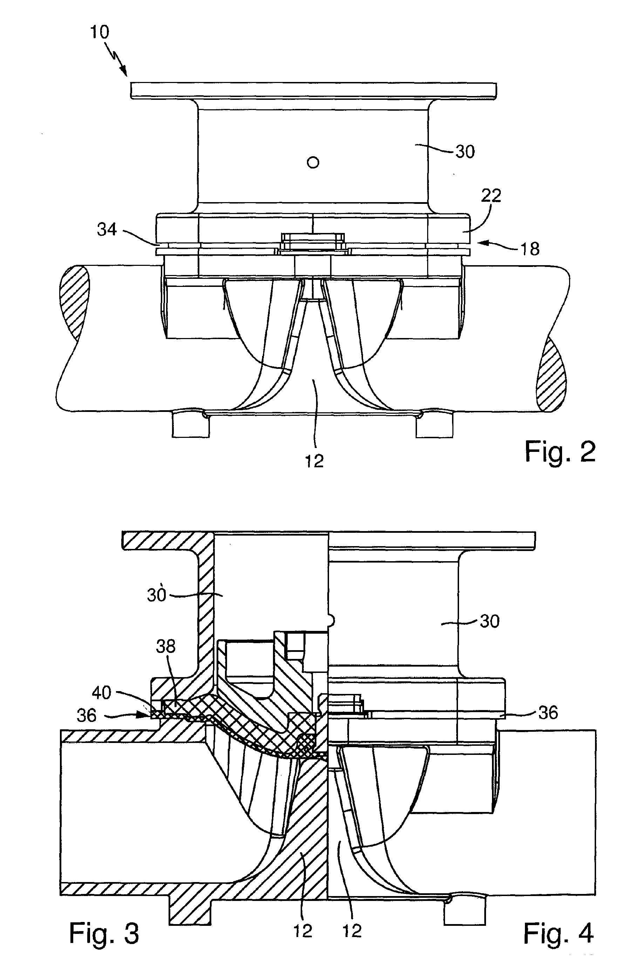

In der Figur 2 ist das Membranventil 10 zusammengebaut, die Absperrmembran 18 aber noch nicht verpresst, was aber in den Figuren 3 und 4 dargestellt ist. Durch Anziehen der Schrauben wird die Absperrmembran 18 so weit verpresst, bis der Spalt 34 (siehe Figur 2) geschlossen ist. Aus Figur 3 ist erkennbar, dass die Absperrmembran 18 von einem Membranschild 36 und einer Stützmembran 38 gebildet wird, wobei die Stützmembran 38 aus einem verpressbaren Elastomer besteht. Von Vorteil ist, dass optisch erkennbar ist, wann der Ventilkörper 12 und das Druckstück 20 korrekt miteinander verschraubt sind, nämlich dann, wenn der Spalt 34 geschlossen ist.

Außerdem schließt der Membranschild 36 bündig mit der Außenkontur des Zwischenstücks 30 ab, so dass die korrekte Lage des Membranschildes 36 ebenfalls von außen sichtbar ist. Da bei der Innenreinigung des Membranventils 10 mitunter hohe Temperatur- und Druckunterschiede entstehen, besteht die Gefahr, dass die Absperrmembran 18 und insbesondere der Membranschild 36 durch den entstehenden Unterdruck nach innen gezogen wird. Durch den sichtbaren Rand des Membranschilds 36 ist von außen erkennbar, wenn durch ein Vakuum in der Rohrleitung der Membranschild 36 nach innen gezogen wurde, so dass geeignete Maßnahmen ergriffen werden können.

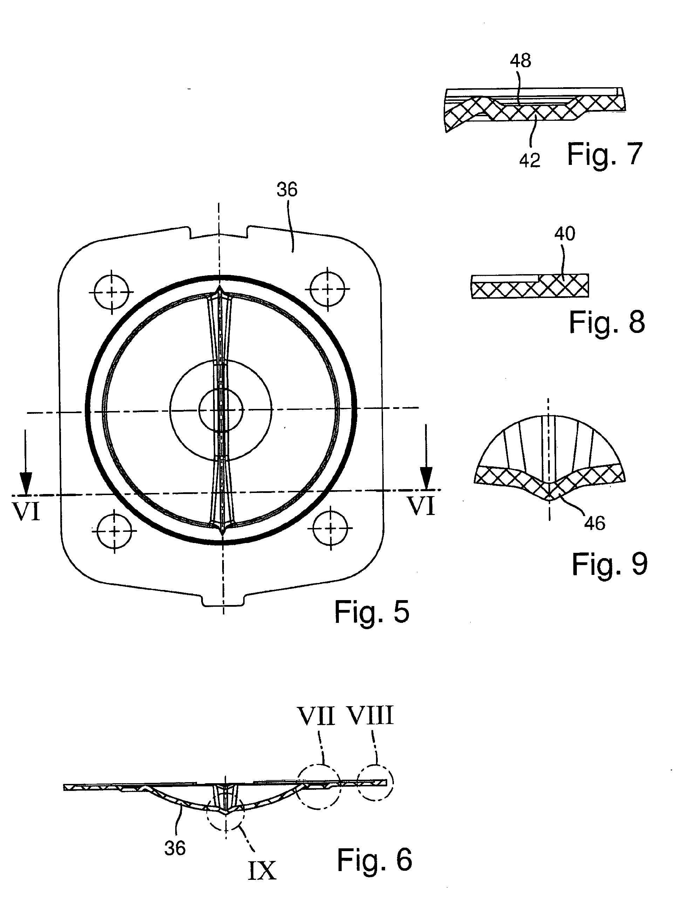

Die Figuren 5 bis 9 zeigen Ansichten und Schnitte des Membranschilds 36, wobei insbesondere aus Figur 6 deutlich erkennbar ist, dass der Membranschild 36, abgesehen vom Ausschnitt VIII, eine einheitliche Dicke aufweist. Im Ausschnitt VIII, der in der Figur 8 vergrößert dargestellt ist, vergrößert sich die Dicke im Bereich des Randes 40. Auf diesem Rand 40 kommt die Stützmembran 38 aber nicht zu liegen, was auch deutlich in Figur 3 erkennbar ist. Also ist der von der Stützmembran 38 überdeckte Bereich des Membranschildes 36 einheitlich dick. Der verdickte Rand 40 besitzt den Vorteil, dass durch diese sogenannte Kammerung die zur Montage notwendige Verpressung von außen durch einen Formschluss der unteren Kante des Zwischenstücks 30 und der oberen Kante der Kammerung (oder des Randes des Membranschildes) erkennbar ist. Außerdem verhindert oder zumindest erschwert die Kammerung ein Fließen des Materials der Stützmembran 38 nach außen, was zu einer Undichtheit führen kann.

Die Figur 7 zeigt den Ausschnitt VII gemäß Figur 6 und es ist ein Dichtungswulst 42 erkennbar, der auf dem Ventilköper 12 aufsitzt. Durch diesen Dichtungswulst 42 wird erreicht, dass die Flächenpressung auf der Membranschild 36 zur Abdichtung nach außen definiert im Bereich der Dichtkontur 44 des Ventilkörpers 12 aufgebracht wird. Im Bereich des Dichtsteges 28 des Ventilkörpers 12 weist der Membranschild 36 nach wie vor eine Dichtkante 46 auf (Figur 9), die eine hohe Flächenpressung erlaubt.

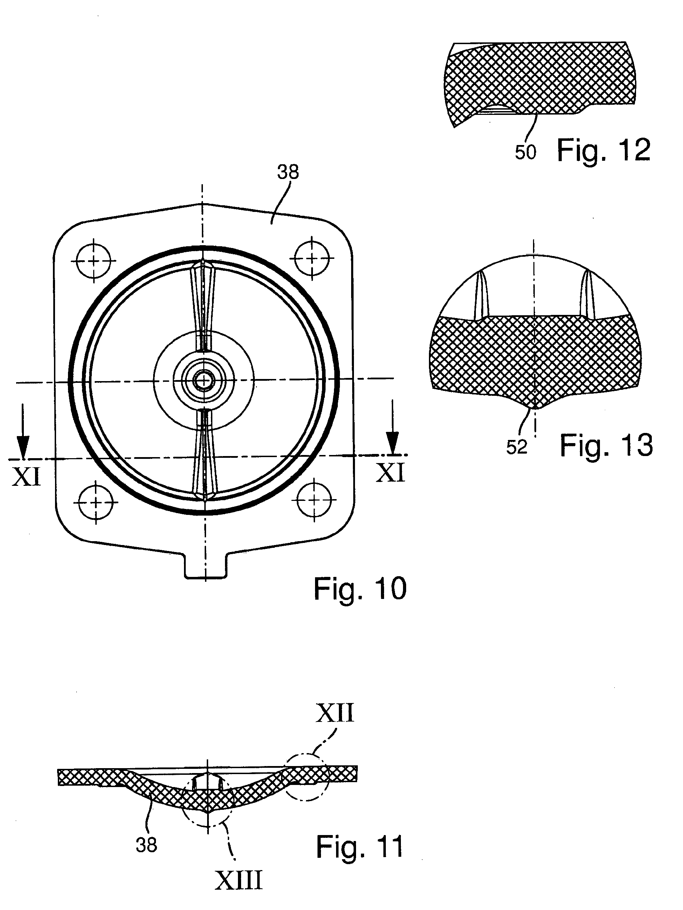

Die Figuren 10 bis 13 zeigen Ansichten und Schnitte der Stützmembran 38. Gegenüberliegend zum Dichtungswulst 42 des Membranschildes 36 befindet sich eine Nut 48 (Figur 7), in welche ein Stützwulst 50 der Stützmembran 38 eingreift (Figur 12). Ebenso wird die Dichtkante 46 von einer Stützkante 52 (Figur 13) der Stützmembran 38 hintergriffen. Hierdurch wird der Membranschild 36 nicht nur exakt positioniert sondern auch gegen Verrutschen abgestützt und gleichmäßig mit Druck beaufschlagt.

## Patentansprüche

1. Membranventil (10), insbesondere für fluide Medien, mit einem Ventilkörper (12), einem in Richtung des Ventilkörpers (12) bewegbaren Druckstück (20) zur Beaufschlagung einer Absperrmembran (18), sowie einem Zwischenstück (30), in welchem das Druckstück (20) verlagerbar ist, wobei die Absperrmembran (18) eine dem Druckstück (20) zugewandte Stützmembran (38) und einen dem Ventilkörper (12) zugewandten Membranschild (36) aufweist, wobei die Wand des Membranschildes (36) im von der Stützmembran (38) überdeckten Abschnitt eine einheitliche Dicke aufweist und der Membranschild (36) im am Rand des Ventilkörpers (12) aufliegenden Bereich einen Dichtungswulst (42) aufweist, der eine breite, insbesondere flächige Auflagefläche besitzt, **dadurch gekennzeichnet, dass** der Membranschild (36) die Stützmembran (38) radial überragt und der die Stützmembran (38) überragende Rand (40) des Membranschildes (36) die gleiche oder eine größere Dicke aufweist, als der von der Stützmembran (38) überdeckte Teil des Membranschildes (36).

2. Membranventil nach Anspruch 1, **dadurch gekennzeichnet, dass** der Rand (40) des Membranschildes (36) bei montiertem Membranventil (10) von außen sichtbar ist.

3. Membranventil nach Anspruch 2, **dadurch gekennzeichnet, dass** der Rand (40) des Membranschildes (36) bündig mit dem am Membranschild (36) oder der Stützmembran (38) anliegenden Flansch (22) des Zwischenstücks (30) abschließt.

4. Membranventil nach einem der vorhergehenden Ansprüche, **dadurch gekennzeichnet, dass** der Membranschild (36) auf der dem Dichtungswulst (42) gegenüberliegenden Seite eine Nut (48) aufweist und dass die Stützmembran (38) auf ihrer dem Membranschild (36) zugewandten Seite einen in die Nut (48) eingreifenden Stützwulst (50) aufweist.

5. Membranventil nach einem der vorhergehenden Ansprüche, **dadurch gekennzeichnet, dass** der Membranschild (36) eine auf dem Dichtsteg (28) des Ventilkörpers (12) zu liegen kommende Dichtkante (46) aufweist.

6. Membranventil nach Anspruch 5, **dadurch gekennzeichnet, dass** der Membranschild (36) auf der der Dichtkante (46) gegenüberliegenden Seite eine Nut aufweist und dass die Stützmembran (38) auf ihrer dem Membranschild (36) zugewandten Seite einen in die Nut eingreifenden Stützkante (52) aufweist.

7. Membranventil nach einem der vorhergehenden Ansprüche, **dadurch gekennzeichnet, dass** die Dicke des Membranschildes (36) im Dombereich von der einheitlichen Dicke abweicht.

8. Membranschild (36) und/oder Stützmembran (38) für ein Membranventil (10) nach einem der vorhergehenden Ansprüche.

## Claims

1. Diaphragm valve (10), in particular for fluid media, having a valve body (12), a compressor (20), able to be moved towards the valve body (12), for applying pressure to a shut-off diaphragm (18), and an adaptor (30) in which the compressor (20) is displaceable, the shut-off diaphragm (18) having a backing diaphragm (38) adjacent the compressor (20) and a diaphragm facing (36) adjacent the valve body (12), that portion of the wall of the diaphragm facing (36) which is covered by the backing diaphragm (38) being of a uniform thickness and the diaphragm facing (36) having, in the region resting in contact with the edge of the valve body (12), a sealing land (42) which has a contact-making surface which is wide, and in particular of large area, **characterised in that** the diaphragm facing (36) projects beyond the backing diaphragm (38) radially, and that edge (40) of the diaphragm facing (36) which projects beyond the backing diaphragm (38) is of the same thickness as, or a greater thickness than, the part of the diaphragm facing (36) which is covered by the backing diaphragm (38).

2. Diaphragm valve according to claim 1, **characterised in that** the edge (40) of the diaphragm facing (36) is visible from the exterior when the diaphragm valve (10) is in the assembled state.

3. Diaphragm valve according to claim 2, **characterised in that** the edge (40) of the diaphragm facing (36) terminates flush with the flange (22) of the adaptor (30), which flange (22) rests on the diaphragm facing (36) or the backing diaphragm (38).

4. Diaphragm valve according to one of the preceding claims, **characterised in that** the diaphragm facing (36) has a groove (48) on the opposite side from the sealing land (42), and **in that** the backing diaphragm (38) has, on its side adjacent the diaphragm facing (36), a supporting land (50) which engages in the groove (48).

5. Diaphragm valve according to one of the preceding claims, **characterised in that** the diaphragm facing (36) has a sealing edge (46) which comes to rest on the sealing weir (28) in the valve body (12).

6. Diaphragm valve according to claim 5, **characterised in that** the diaphragm facing (36) has a groove on the opposite side from the sealing edge (46), and **in that** the backing diaphragm (38) has, on its side adjacent the diaphragm facing (36), a supporting edge (52) which engages in the groove.

7. Diaphragm valve according to one of the preceding claims, **characterised in that** the thickness of the diaphragm facing (36) in the domed region is different from the uniform thickness.

8. Diaphragm facing (36) and/or backing diaphragm (38) for a diaphragm valve (10) valve according to one of the preceding claims.

## Revendications

1. Vanne à membrane (10), plus particulièrement pour des milieux fluides, avec un corps de vanne (12), un élément de pression (20) mobile en direction du corps de vanne (12) pour l'application d'une force sur une membrane d'arrêt (18), ainsi qu'un élément intermédiaire (30), dans lequel l'élément de pression (20) peut être déplacé, la membrane d'arrêt (18) comprenant une membrane d'appui (38) orientée vers l'élément de pression (20) et une protection de membrane (36) orientée vers le corps de vanne (12), la paroi de la protection de membrane (36) présentant, dans la portion recouverte par la membrane d'appui (38), une épaisseur uniforme et la protection de membrane (36) comprend, sur la partie s'appuyant contre le bord du corps de vanne (12), un bourrelet d'étanchéité (42) qui présente une surface d'appui large, plus particulièrement sur toute la surface, **caractérisée en ce que** la protection de membrane (36) dépasse radialement de la membrane d'appui (38) et le bord (40) de la protection de membrane (36) dépassant de la membrane d'appui (38) présente une épaisseur égale ou supérieure à celle de la partie de la protection de membrane (36) recouverte par la membrane d'appui (38).

2. Vanne à membrane selon la revendication 1, **caractérisée en ce que** le bord (40) de la protection de membrane (36) est visible de l'extérieur lorsque la vanne à membrane (10) est montée.

3. Vanne à membrane selon la revendication 2, **caractérisée en ce que** le bord (40) de la protection de membrane (36) est en affleurement avec la bride (22) de l'élément intermédiaire (30) s'appuyant sur la protection de membrane (36) ou la membrane d'appui (38).

4. Vanne à membrane selon l'une des revendications précédentes, **caractérisée en ce que** la protection de membrane (36) comprend, sur le côté opposé au bourrelet d'étanchéité (42), une rainure (48) et **en ce que** la membrane d'appui (38) comprend, sur son côté orienté vers la protection de membrane (36), un bourrelet d'appui (50) s'emboîtant dans la rainure (48).

5. Vanne à membrane selon l'une des revendications précédentes, **caractérisée en ce que** la protection de membrane (36) comprend une arête d'étanchéité (46) qui vient s'appuyer sur la nervure d'étanchéité (28) du corps de vanne (12).

6. Vanne à membrane selon la revendication 5, **caractérisée en ce que** la protection de membrane (36) comprend, sur le côté opposé à l'arête d'étanchéité (46), une rainure et **en ce que** la membrane d'appui (38) comprend, sur son côté orienté vers la protection de membrane (36), une arête d'appui (52) s'emboîtant dans la rainure.

7. Vanne à membrane selon l'une des revendications précédentes, **caractérisée en ce que** l'épaisseur de la protection de membrane (36) est différente de l'épaisseur uniforme au niveau du dôme.

8. Protection de membrane (36) et/ou membrane d'appui (38) pour une vanne à membrane (10) selon l'une des revendications précédentes.
